Europäisches Patentamt

European Patent Office

Office européen des brevets

(19)

(11) Numéro de publication: **0 372 078**

**A1**

(12)

# DEMANDE DE BREVET EUROPEEN PUBLI E EN APPLICATION DE L'article 158, paragraphe 3 de la CBE

(21) Numéro de dépôt: 88909406.6

(22) Date de dépôt: 20.05.88

(86) Numéro de dépôt internationale :
PCT/SU88/00109

(87) Numéro de publication internationale :
WO 89/11403 (30.11.89 89/28)

(51) Int. Cl.⁵: **B60G 5/00**

(43) Date de publication de la demande:
**13.06.90 Bulletin 90/24**

(84) Etats contractants désignés:
**DE FR GB IT SE**

(71) Demandeur: **KIEVSKY INZHENERNO-STROITELNY INSTITUT Vozdukhoflotsky pr., 31 Kiev 252037(SU)**

(72) Inventeur: **ZAMMITER, Mikhail Naumovich ul. Aviakonstruktora Antonova, 2/32-4-18 Kiev, 252043(SU)**
Inventeur: **AZAMATOV, Ramil Abdreevich Novy gorod, 17/03-98 Naberezhnye Chelny, 423823(SU)**
Inventeur: **GRECHANY, Jury Anatolievich Novy gorod, 45/15-81 Naberezhnye Chelny, 423823(SU)**
Inventeur: **NEDOREZOV, Vladimir Afanasievich ul. Chekhova, 1-2 Dnepropetrovskaya obl. Sinelnikovo, 323110(SU)**
Inventeur: **OBLOVATSKY, Anatoly Konstantinovich ul. Mira, 33-10 Dnepropetrovskaya obl. Sinelnikovo, 323110(SU)**

(74) Mandataire: **Durand, Yves Armand Louis et al Cabinet Z. Weinstein 20, Avenue de Friedland F-75008 Paris(FR)**

(54) SUSPENSION COMPENSEE POUR ESSIEUX A AGENCEMENT SEQUENTIEL DE MOYENS DE TRANSPORT.

(57) La suspension à balancier est destinée à relier un cadre (7) d'un moyen de transport aux ponts (5, 6). Dans le but de simplifier le schéma du montage, le ressort en C (1) est réalisé sous forme d'une

plaque sollicitée dans son plan de flexion et est articulé par sa partie médiane (2) aux ponts (5, 6) du moyen de transport et au cadre (7) par ses parties extrêmes (3, 4). Par l'intermédiaire des biellettes (10, 11), le ressort en C (1) est lié au cadre (7) de sorte que les extrémités du ressort (1) puissent se déplacer au maximum dans la direction verticale et dans la direction horizontale d'une valeur qui ne dépasse pas la moitié de la déformation admissible par le ressort (1).

FIG.1

"Suspension à balancier d'une suite de ponts d'un moyen de transport".

Domaine de l'invention

L'invention concerne les suspensions des ponts d'un moyen de transport et peut être utilisée avec succès dans des camions à deux ponts arrières, les deux ou bien un seul de ces ponts pouvant être moteurs.

Etat de la technique

Ces derniers temps, les suspensions utilisant un ressort de Zamitter (SU-A-1040244) trouvent emploi sur une échelle de plus en plus large. Ce ressort est du type en forme de C réalisé à l'aide d'une plaque située dans le plan de flexion, c'est-à-dire sous forme d'une plaque qui se fléchit sous l'action d'une charge dans son plan de plus grande rigidité. Le ressort de Zamitter encaisse de manière efficace aussi bien des charges de compression que des charges de traction. Ces avantages sont dus à l'utilisation particulière d'une faible quantité de métal pour la fabrication de ce ressort qui permet d'obtenir une souplesse suffisante.

Dans la demande de brevet de R.A. Azamatov et autres qui ont été déposées précédemment, on a décrit une suspension à balancier pour des ponts de moyen de transport comportant un ressort en C constitué par une plaque disposée suivant son plan de flexion et liée de manière mobile à un pont et au cadre d'un moyen de transport. Cette suspension est efficace dans des moyens de transport ayant au moins deux ponts disposés l'un derrière l'autre. Cependant, le schéma de cette suspension utilisé pour la liaison au cadre et au ressort comprend au moins deux leviers à deux bras et une série d'éléments d'articulation et est compliqué, ce qui complique le montage de cette suspension et augmente la quantité de métal nécessaire à sa fabrication et, par conséquent, la quantité de métal utilisé pour la fabrication de tout le moyen de transport.

Exposé de l'invention

On s'est donc proposé de créer une suspension à balancier pour un pont d'un moyen de transport dans laquelle un changement du point d'application des forces et des réactions sous l'effet desdites forces permettrait de simplifier le schéma de montage de la suspension et d'élargir ses possibilités technologiques.

Le problème ainsi posé est résolu à l'aide d'une suspension à balancier pour un pont de moyen de transport comportant un ressort en C constitué par une plaque sollicitée dans son plan de flexion et liée de manière mobile aux ponts et à un cadre du moyen de transport, caractérisée selon l'invention, en ce que le ressort en C est articulé par sa partie médiane aux ponts du moyen de transport et par ses parties extrêmes au cadre par l'intermédiaire d'articulations et en ce que la position de l'axe de rotation de chaque articulation fixée sur le cadre est choisie en tenant compte de la valeur suivant laquelle le déplacement horizontal ne soit pas supérieur à la moitié de la déformationn admissible par le ressort en C dans la direction horizontale.

Grâce au fait que les ponts sont articulés sur le ressort en C, on réduit le nombre d'éléments dans la chaîne pont-cadre et le moment de la force appliquée directement est équilibré par le moment de réaction du ressort.

En outre, en montant pivotantes les extrémités du ressort en C à l'aide d'articulations fixées sur le cadre du moyen de transport dans une zone qui n'est limitée par aucun des éléments de la construction, il est possible d'augmenter la course de travail et la course de débattement du ressort et d'élever ainsi l'élasticité de la suspension.

Description brève des dessins

L'invention sera mieux comprise et d'autres buts, détails et avantages de celle-ci apparaîtront mieux à la lumière de la description explicative qui va suivre de différents modes de réalisation donnés uniquement à titre d'exemples non limitatifs et suivant les dessins annexés dans lesquels :

La figure 1 représente d'une manière schématique une suspension conforme à l'invention qui relie le cadre d'un moyen de transport à deux ponts ;

La figure 2 représente en vue de haut la suspension illustrée sur la figure 1.

Description du mode de réalisation préféré de l'invention

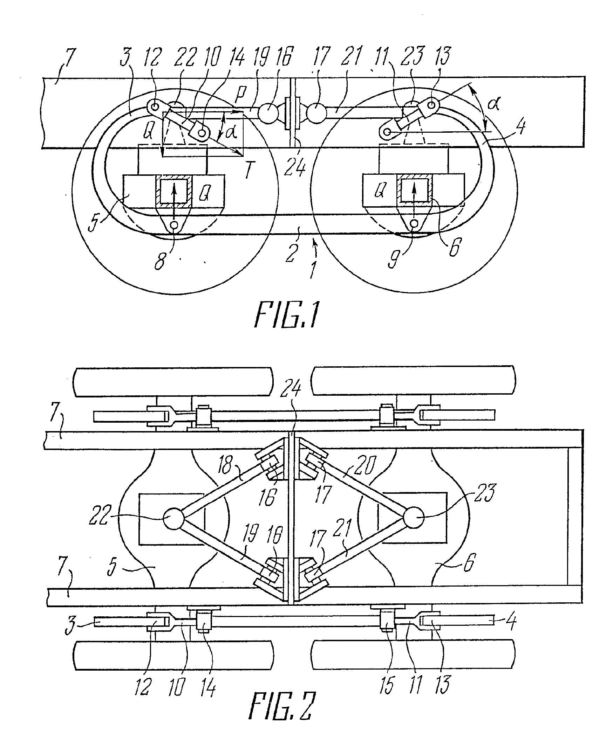

La suspension à balancier, représentée sur la figure 1 est destinée à relier le cadre d'un moyen de transport à deux ponts. Cette suspension comporte un ressort 1 en forme de C et constitué par une plaque disposée dans son plan de flexion. Le ressort 1 comprend une partie médiane 2 et deux parties extrêmes identiques 3 et 4, situées respectivement en partie avant et en partie arrière du moyen de transport. Le ressort 1 est lié de manière mobile aux ponts 5 et 6 du moyen de transport et à un cadre 7, plus précisément aux longerons de ce cadre. Selon l'invention, le ressort 1 est lié aux ponts 5 et 6 du moyen de transport par des axes de rotation 8 et 9. Le ressort 1 est lié au cadre 1 à l'aide d'articulations 10 et 11 ainsi que par des parties extrêmes 3 et 4 et plus précisément par des yeux de façon à pouvoir tourner autour des axes de rotation 12 et 13 dans le plan de flexion du ressort 1, comme on le voit bien sur la figure 2, le ressort est lié aux articulations 10 et 11 respectivement. A leur tour, les articulations 10 et 11 sont liées au cadre 7 et peuvent tourner autour des axes de rotation 14 et 15 dans le plan susmentionné. Le ressort 1 est lié au cadre 7 de façon que les axes 12 et 13 puissent se déplacer dans le sens vertical d'une valeur maximale et que le déplacement horizontal ne soit pas supérieur à la moitié de la déformation admissible par le ressort 1 dans la direction horizontale. Il convient de noter qu'on a utilisé des dispositifs caoutchouc-métal connus sous le nom "silentbloc" pour éliminer le frottement entre les surfaces entrant en contact des ensembles comprenant des articulations.

Dans le but de supprimer les déformations transversales, on a relié le cadre 7 aux ponts 5 et 6 à l'aide des ensembles d'articulations sphériques 16 et 17, des bielles de réaction 18, 19, 20, 21 et par des ensembles d'articulations 22 et 23 ayant un axe de rotation vertical (figures 1 et 2).

Dans le présent exemple de réalisation de l'invention, les ensembles d'articulations sphériques 16 et 17 sont montés sur une traverse 24. Toutefois, il est évident que ces ensembles peuvent être montés directement sur le cadre 7.

La suspension selon l'invention fonctionne de la manière suivante.

Lorsque le moyen de transport n'est pas chargé, par exemple lorsqu'il est soulevé au-dessus d'une surface d'appui, seule la force de pesanteur des masses non suspendues par des ressorts 2 Qo est transmise au cadre 7 par l'intermédiaire des articulations 10 et 11. Dans ce cas, les articulations sont sollicitées par les forces $To = \dfrac{Qo}{\sin\alpha o}$ et le ressort 1 est tendu par les forces $Po = \dfrac{Qo}{tg\alpha o}$ (figure 1).

Lors du débattement simultané des deux roues, par exemple lorsque le moyen de transport traverse un fossé, l'angle $\alpha o$ peut diminuer par comparaison avec l'angle représenté sur la figure 1 ou même peut changer de signe. Les charges d'inertie qui agissent à ce moment sur la masse de la suspension qui n'est pas suspendue sont amorties par le ressort 1 et encaissées par le cadre 7.

Dans le cas d'un déséquilibre des charges agissant sur les ponts, par exemple quand le moyen de transport suspendu à une grue descend et repose sur une surface d'appui tout d'abord par une roue d'un des ponts, l'angle d'inclinaison de l'articulation le plus proche du pont qui a rencontré un obstacle réagit et la suspension continue à se balancer sur les articulations jusqu'à ce que la charge soit égalisée entre les deux roues.

Sous l'effet d'une charge maximale $2 Q_m$ agissant sur la suspension, les articulations 10 et 11 sont inclinées suivant un angle maximal $\alpha_m$. A ce moment, le ressort 1 réagit sous l'effet de deux forces maximales $P_m$ orientées l'une à l'encontre de l'autre.

La plus grande déformation en compression du ressort

est : $\delta_\Sigma = 2\delta$ alors que la plus grande course de chacun des ponts est : $f = 1 (\sin\alpha_m - \sin\alpha_o)$

Dans ces formules, 1 est la longueur de l'articulation 10 ou 11 (distance entre les axes de rotation 12 et 14 ou 13 et 15).

Les articulations 10 et 11 sont alors sollicitées par une force telle que $T_m = \dfrac{Qm}{\sin\alpha_m}$. Les forces latérales et partiellement les forces longitudinales agissant sur la suspension sont encaissées par les bielles de réaction 18, 19, 20, 21. Le moment de réaction et le moment de freinage sont encaissés par des bielles de réaction et par le ressort 1 lui-même, à la partie médiane duquel sont transmis, en plus d'un effort de traction, ainsi que par l'intermédiaire des ensembles avec les axes 8 et 9, les forces dans la direction longitudinale provoquées par ces moments.

En plus de l'augmentation de la souplesse de conduite du moyen de transport, la présente invention permet d'accroître l'élasticité de la suspension.

La suspension faisant l'objet de l'invention possède les possibilités technologiques les plus variées. Il est possible de l'utiliser tant avec un seul pont qu'avec plusieurs ponts disposés par paire sans apporter aucune modification à sa conception.

De plus, la technologie de fabrication et d'assemblage de la suspension conforme à l'invention est assez simple, ce qui permet de réduire sensiblement le coût de cette suspension en comparaison avec les suspensions connues utilisées à l'heure actuelle.

## Application industrielle de l'invention

La présente invention peut avantageusement équiper des camions à deux ponts arrières, dont un seul ou les deux ponts peuvent être moteurs.

Revendication .

Suspension à balancier pour des ponts du type disposés l'un derrière l'autre, pour un moyen de transport comprenant un ressort (1) en C et constitué par une plaque disposée dans son plan de flexion et liée de manière mobile aux ponts (8 et 9) et à un cadre (7) du moyen de transport, caractérisée en ce que le ressort (1) en C est articulé par sa partie médiane aux ponts (8 et 9) du moyen de transport et par ses parties extrêmes (3 et 4) au cadre (7) par l'intermédiaire des articulations (10 et 11), et en ce que la position de l'axe (14 et 15) de rotation de chaque articulation (10 et 11) sur le cadre (7) est choisie en fonction de la valeur du déplacement vertical de l'axe (12 et 13) de rotation du ressort (1) avec les articulations (10 et 11) de façon que cette valeur soit la plus grande possible et que le déplacement horizontal ne soit pas supérieur à la moitié de la déformation admissible par le ressort en C dans la direction horizontale.

FIG.1

FIG.2

# INTERNATIONAL SEARCH REPORT

International Application No PCT/SU 88/00109

**I. CLASSIFICATION OF SUBJECT MATTER** (if several classification symbols apply, indicate all) *

According to International Patent Classification (IPC) or to both National Classification and IPC

$IPC^4$  B60G 5/00

**II. FIELDS SEARCHED**

| Minimum Documentation Searched [7] | |
|---|---|
| Classification System | Classification Symbols |
| $IPC^4$ | B60G 5/00+5/06 |

Documentation Searched other than Minimum Documentation
to the Extent that such Documents are Included in the Fields Searched [8]

**III. DOCUMENTS CONSIDERED TO BE RELEVANT [9]**

| Category * | Citation of Document, [11] with indication, where appropriate, of the relevant passages [12] | Relevant to Claim No. [13] |
|---|---|---|
| A | GB, A, 2063784 (PETER KNAGGS) 10 June 1981 (10.06.81) see the abstract, figure 1, reference 13 | 1 |
| A | SU, A1, 751667 ( S. Ya. Margolis) 30 July 1980 (30.07.80)  see column 2, lines 8-23, figure 1 | 1 |
| A | FR, A1, 2573362 (RENAULT VEHICULES INDUS-TRIELS)  23 May 1986 (23.05.86) see the abstract, figure 2, references 16, 17, 37 <br><br> & EP, A1, 183599 , 04.06.86 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 22 December 1988 (22.12.88) | 30 January 1989 (30.01.89) |
| International Searching Authority | Signature of Authorized Officer |
| ISA/SU | |

Form PCT/ISA/210 (second sheet) (January 1985)